# EUROPEAN PATENT APPLICATION

(11) **EP 0 635 639 A1**
(43) Date of publication of application: **25.01.1995**
(21) Application number: 94111404.3
(22) Date of filing: 21.07.1994
(51) Int. Cl.: F03D 11/02

(54) **Improved wind turbine transmission**

(30) Priority: 21.07.1993 IL 10644093
(71) Applicant: Ashot Ashkelon Industries Ltd., Ashkelon 78100 (IL)
(72) Inventor: Lior, David, Herzliya 46328 (IL)
(74) Representative: Modiano, Guido, Dr.-Ing.

(57) **Abstract**

Wind turbine transmission apparatus (8) including at least one planetary transmission stage, operative for providing a continuously variable transmission ratio between a rotational input from a wind-rotor and a rotational output to an electric generator. The variable transmission ratio preferably varies substantially in accordance with the velocity of the wind powering the wind turbine. Preferably, the at least one planetary transmission stage includes a primary planetary stage providing a fixed transmission ratio between the rotational input and a primary rotation, and a secondary planetary stage providing a variable transmission ratio between the primary rotation and the rotational output.

## Description

### FIELD OF THE INVENTION

The present invention relates to wind turbines in general and, more specifically, to improved transmission apparatus for use with wind turbines.

### BACKGROUND OF THE INVENTION

Wind turbines are well known in the art. A typical wind turbine includes a wind-powered rotor, a transmission mechanism and an electric generator.

The speed conversion ratio of a turbine is normally defined as the rotor speed, in rounds per minute (RPM), divided by the RPM speed of the rotating element in the electric generator. Wind turbine transmissions generally provide a constant (i.e. fixed) transmission ratio.

Since wind-turbines are normally connected to existing electric grids, the frequency of alternating current in the grid (typically 50-60 Hz A.C.) constrains the generator to a constant speed of rotation.

Due to the generally constant speed conversion ratio of the transmission mechanism and the constrained rotation of the electric generator, the wind-rotor is normally also constrained to a constant speed of rotation. This results in an average loss of approximately 20% of usable wind power, due to aerodynamic inefficiency of the rotor.

Partial reduction of the above mentioned aerodynamic inefficiency of the rotor can be achieved through "pitch control" which, generally speaking, consists of varying the angle of the rotor's blades in accordance with the velocity of the wind. However, this solution is only partial and does not eliminate the aerodynamic energy loss.

Wind turbines having fixed-ratio transmission are generally characterized by low fatigue-resistance. It is well known that gusts of wind, which apply high input torques to the wind turbine through the wind-powered rotor, have an accumulatively straining effect on the wind-turbines. Due to the constrained speed of the wind-powered rotor, these sudden energy inputs are not translated into faster rotation of the turbine but, rather, they are internally absorbed by elements of the wind turbine.

For the foregoing reasons, attempts have been made in the past to construct wind turbine transmissions featuring multiple transmission-ratios to account for different wind situations. However, since the frequency of the grid must be perfectly matched, for most purposes, such devices provide only slight efficiency improvement and only for unique wind-environments, wherein wind velocity changes are drastic and occur at known intervals. In most cases, wind velocity-change patterns can not be foreseen at practical accuracy.

U.S. Patent 3,140,170 discloses a fluid-driven turbine, including a transmission assembly which is controlled by a hydraulic circuit. The controlled transmission is employed to stabilize the torque exerted on the generator by varying the speed of the rotor relative to the generator. This is achieved by letting the rotor "slip" whenever the torque at the generator exceeds a certain level. Apparently, this Patent is concerned with controlling the torque at the generator during abrupt acceleration/deceleration of the rotor. When "slipping" of the transmission occurs, substantial amounts of energy are inevitably lost.

There have also been attempts to provide an electronic solution to the above mentioned efficiency problem. In essence, this solution is based on using a variable ratio frequency conversion device to convert the variable frequency generated by an unconstrained wind turbine. Although this solution enables the rotor to rotate at optimal speeds, it raises other problems. Firstly, approximately 10% of the electric energy output is lost at the variable converter. Secondly, such frequency converters generally produce uneven sine waves, including various harmonic frequencies, causing undesirable interference. Thirdly, such conversion devices require substantial additional production and maintenance costs which make them impractical. It is appreciated that these costs are critical in determining the usefulness of energy conversion apparatus.

U.S. Patent 4,695,736 describes a variable speed wind turbine, including an A.C. frequency converter, as described in the preceding paragraph.

### SUMMARY OF THE INVENTION

It is therefore an object of the present invention to provide an efficient, low-cost, transmission mechanism for use with wind turbines. A preferred embodiment of the present invention provides a transmission mechanism for wind turbines featuring a continuously variable speed conversion ratio.

In accordance with a preferred embodiment of the present invention there is thus provided wind turbine transmission apparatus including at least one planetary transmission stage, operative for providing a continuously variable transmission ratio between a rotational input from a wind-rotor and a rotational output to an electric generator. Further, in a preferred embodiment of the present invention, the variable transmission ratio varies substantially in accordance with the velocity of the wind powering the wind turbine.

Additionally in accordance with a preferred embodiment of the invention, the at least one planetary transmission stage includes a primary planetary stage providing a fixed transmission ratio between the rotational input and a primary rotation, and a secondary planetary stage providing a variable transmission ratio between the primary rotation and the rotational output.

In a preferred embodiment of the invention, the transmission apparatus further includes at least one servo motor operative to receive an electric power input and thereby to provide appropriate rotational power to the at least one planetary transmission stage, when the rotational input is below a preselected rate, and operative to receive appropriate rotational power from the at least one planetary transmission stage and to generate a corresponding electric power output, when the rotational input is above the preselected rate, such that the rotational output remains substantially at a preselected, constant, rate.

Preferably, the appropriate rotational power provided to and/or received from the at least one planetary transmission stage is provided to and/or received from the second planetary stage.
additionally or alternatively, the electric power is generated and received through a variable-ratio AC frequency converter.

In accordance with one, preferred, embodiment of the present invention, the primary planetary stage includes:
an input shaft operative to receive the rotational input;
a substantially stationary primary ring gear;
a primary planetary arrangement, including a plurality of primary planet gears, associated with the input shaft and rotatable with respect to the primary ring gear; and
a primary sun gear for providing the primary rotation,
wherein the rotational input is received by the input shaft and transmitted by the primary planetary arrangement to the primary sun gear which, thereby, provides the primary rotation.

Additionally or alternatively, the secondary planetary stage includes:
a rotatable primary ring gear;
a secondary planetary arrangement, including a plurality of secondary planet gears, associated with the primary rotation and rotatable with respect to the circumferential ring gear; and
an secondary sun gear for providing the rotational output,
wherein the primary rotation is received by the secondary planetary arrangement and transmitted to the secondary sun gear which, thereby, provides the rotational output.

In further accordance with this preferred embodiment of the invention, the secondary ring gear rotates in the same direction as the secondary sun gear, whenever the rotational input is above a preselected rate, and rotates in a direction opposite that of the secondary sun gear, whenever the rotational input is below the preselected rate, such that the rotational output remains substantially at a preselected, constant, rate.

Additionally, in accordance with this preferred embodiment, the transmission apparatus includes at least one servo motor operative to receive an electric power input and thereby to appropriately rotate the secondary ring gear of the secondary planetary stage when the rotational input is below the preselected rate, and operative to receive appropriate rotational power from the secondary ring gear and to generate a corresponding electric power output when the rotational input is above the preselected rate, such that the rotational output remains substantially at the preselected, constant, rate.

In accordance with a preferred embodiment of the present invention, there is also provided a wind turbine including a wind-powered rotor, transmission apparatus as described in the preceding paragraphs wherein the rotational input is a variable-rate rotation received from the wind-powered rotor, and an AC voltage generator operative to receive the rotational output and to provide a corresponding output voltage. Preferably, the rotational output of the transmission apparatus is at a fixed rate.

In a preferred embodiment of the invention, the corresponding output voltage includes an AC voltage at a fixed frequency. Preferably, the fixed frequency is 50 Hz or 60 Hz.

According to an alternative embodiment of the invention, there is provided a wind turbine including a wind-powered rotor, transmission apparatus as described in preceding paragraphs wherein the rotational input is a variable-rate rotation received from the wind-powered rotor, and an AC voltage generator operative to receive the rotational output and to provide a corresponding output voltage to an electric grid, wherein the electric power output of the servo motor is generated to the electric grid and the electric power input is supplied to the servo motor by the electric grid.

### BRIEF DESCRIPTION OF THE DRAWINGS

The present invention will be understood and appreciated more fully from the following detailed description of preferred embodiment of the invention, taken in conjunction with the following drawings in which:
Fig. 1 is a simplified block diagram illustrating wind turbine apparatus in accordance with the present invention;
Fig. 2 is a cross-sectional illustration of variable-ratio transmission apparatus useful for the operation of the wind turbine apparatus of Fig. 1; and
Fig. 3 is a graph showing the improved performance of wind turbine apparatus according to the present invention, compared to existing wind turbine apparatus using fixed-ratio transmissions.

### DETAILED DESCRIPTION OF A PREFERRED EMBODIMENT

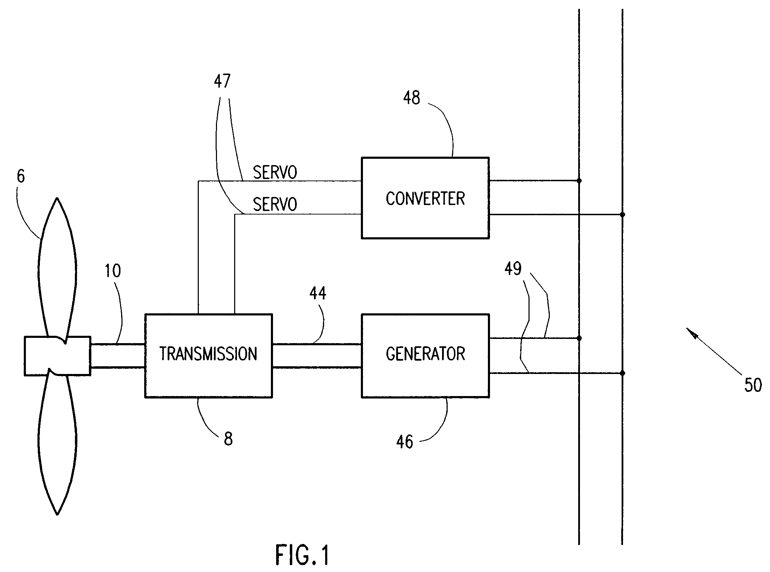

Reference is now made to Fig. 1 which illustrates wind turbine apparatus in accordance with the present invention. The wind turbine apparatus includes a wind powered rotor 6 associated, via an input shaft 10, with a variable conversion-ratio transmission apparatus 8, described in great detail hereinbelow, which is associated, in turn, with an alternating current (AC) generator 46. In a preferred embodiment of the invention, generator 46 supplies, by virtue of supply lines 49, an AC voltage at a preselected, fixed, frequency (typically 50 or 60 Hz) to an AC grid 50. AC grid 50 may be any common AC power network which receives electric power from various generators and supplies electric power to various AC appliances. Alternatively, generator 46 may be the sole generator of a low scale network, such as a private house network, and in such case the AC frequency is not necessarily fixed.

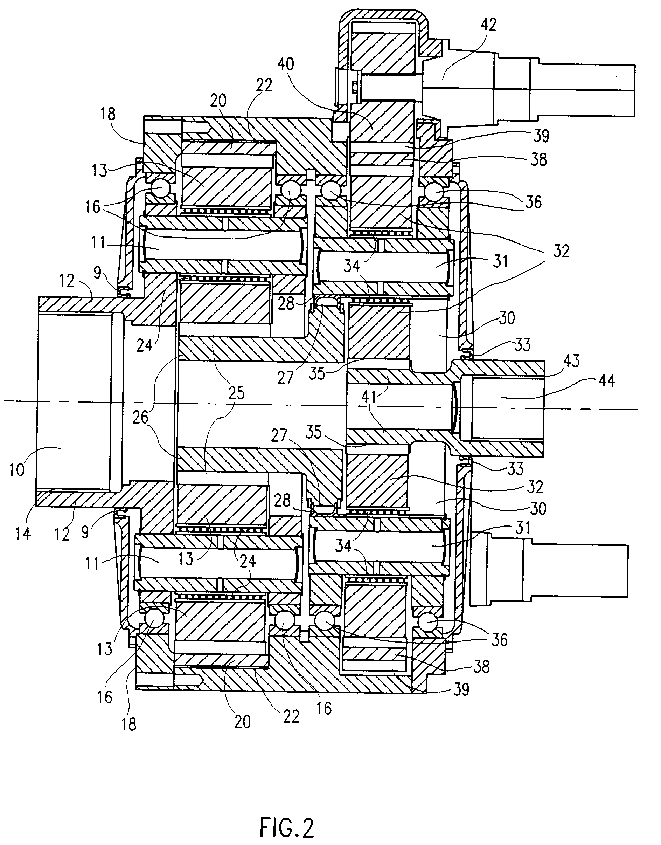

As can be seen in Fig. 1, grid 50 is preferably further connected, via servo lines 47, to at least one AC servo motor 42 (Fig. 2) of transmission apparatus 8. A variable-ratio AC frequency converter 48 is preferably provided to servo lines 49 for adapting the electric input/output of at least one servo motor 42 to the input/output of grid 50. In a preferred embodiment of the invention, as explained in detail below, servo motor 42 either generates or consumes electric power, depending on the rotational speed of wind-powered rotor 6.

Reference is now made also to Fig. 2, which illustrates a cross-section of variable conversion-ratio transmission apparatus 8, constructed in accordance with a preferred embodiment of the present invention. As can be seen in Fig. 2, transmission apparatus 8 is driven by input shaft 10, which is associated with wind-powered rotor 6 as explained above. Input shaft 10 is associated, preferably via an internally cogged sleeve 14, with a primary planetary arrangement 12, including a plurality of primary planetary axles 11, located inside a transmission housing 18. Sleeve 14 provides limited relative movement between shaft 10 and arrangement 12 so as to compensate for random misalignments in the system, as well known in the art.

The interior of transmission housing 18 is preferably sealed from the external environment by a low-friction seal 9 which is fixedly mounted on housing 18 and surrounds the portion of planetary arrangement 12 associated with input shaft 10.

An externally cogged primary planet-gear 13 is rotatably mounted, via a low-friction roller bearing 24, on each of axles 11. In a preferred embodiment of the invention there are five primary planet gears 13, associated with five respective axles 11 of planetary arrangement 12, two of which are seen in Fig. 2. Primary planetary arrangement 12 is preferably slidably supported by two circumferential ball bearings 16 which are fixedly connected to transmission housing 18. It should be appreciated that any suitable, low-friction, bearings known in the art may be used as bearings 24 and 16.

Transmission apparatus 8 further includes an internally cogged circumferential ring-gear 20 which engages the external cogs on planet-gears 13 of primary planetary arrangement 12. Ring-gear 20 is preferably associated with transmission housing 18 via a circumferential sleeve 22 which allows minuscule radial displacements of ring-gear 20, due to vibrations and or random misalignments in the system, thereby maintaining a substantially equal distribution of loads between ring-gear 20 and planetary gears 13. When primary planetary arrangement 12 is rotated by input shaft 10, primary gears 13 are forced to rotate about axles 11 due to the cogging engagement of planet gears 13 with circumferential ring-gear 20. Apart from the minuscule fluctuations mentioned above, ring-gear 20 is substantially at rest.

At the radially inward side of primary planetary arrangement 12, cogged planet-gears 13 are engaged with a first cogged portion 25 of a primary sun gear 26, hereinafter referred to as the primary sun gear. Thus, in view of the preceding paragraphs, any rotation of rotor 6 (Fig. 1) results in proportional rotation, at a fixed proportion ratio, of primary sun gear 26. The transmission of rotation from rotor 6 to primary sun gear 26 will be hereinafter referred to as the primary planetary stage. In a preferred embodiment of the invention, the transmission ratio provided by the primary planetary stage is approximately 4.19 to one, i.e the RPM speed of primary sun gear 26 is approximately 4.19 times that of input shaft 10.

A second cogged portion 27 of primary sun gear 26 is circumferentially associated with an internally cogged spherical coupling 28. The cogs of portion 27 are preferably crowned (i.e. rounded) to allow compensation for random misalignments in the system, obtained by minuscule relative displacements between gear 26 and coupling 28. Coupling 28 is fixedly associated with a secondary planetary arrangement 30 including a plurality of secondary axles 31 similar to primary axles 11. An externally cogged secondary planet-gear 32 is rotatably mounted, via a low-friction roller bearing 34, on each of secondary planetary axles 31. In a preferred embodiment of the invention there are three secondary planet-gears 32, associated with three respective secondary axles 31 of secondary planetary arrangement 30, two of which are seen in Fig. 2.

In a preferred embodiment of the invention, secondary planet-gears 32 are similar to primary planet gears 13. However, since primary gears 13 rotate at speeds lower than those of gears 32, gears 13 are generally designed to withstand higher mechanical moments. Thus, the cogs of gears 13 are typically thicker than those of gears 32.

Secondary planetary arrangement 30 is preferably slidably supported by two circumferential ball bearings 36, similar to ball bearings 16, which are fixedly connected to transmission housing 18. A secondary circumferential ring-gear 38, similar to primary circumferential gear 20, engages the external cogging of planet-gears 32 of secondary planetary arrangement 30. However, in contrast to primary gear 20, secondary gear 38 is not supported to housing 18 and, therefore, gear 18 is generally not at rest. Furthermore, the external surface 39 of gear 38 is cogged and engages at least one cogwheel 40, associated with at least one respective servo-motor 42. In a preferred embodiment of the invention there are three servo-motors 42 associated with secondary gear 38, two of which are shown in Fig. 2. The operation of servo motors 42 is described in detail below.

At the radially inward side of secondary planetary arrangement 30, cogged planet-gears 32 are engaged with a cogged portion 35 of a secondary sun gear 41. This completes a secondary planetary stage of rotational transmission, wherein rotation of primary sun gear 26 is translated to rotation of secondary gear 41. However, in contrast to the primary planetary stage, the secondary planetary stage does not provide a fixed transmission-ratio, as fully explained below.

Secondary gear 41 is associated, via a sleeve 43 similar to sleeve 14, with an output shaft 44, seen also in Fig. 1, which rotates generator 46. In a preferred embodiment of the invention, output shaft 44 rotates at a preselected controlled RPM-rate which enables generator 46 to generate AC voltage at a preselected, fixed, frequency (preferably 50 or 60 Hz) to grid 50. It is a particular feature of the present invention that shaft 44 rotates at a constant, fixed, rate while rotor 6 can rotate substantially independently at a varying rate, preferably in accordance with the speed of the wind. This is achieved by a continuously variable transmission-ratio provided by the secondary planetary stage of the present transmission apparatus.

In a preferred embodiment of the invention, the transmission ratio of the secondary planetary stage is between approximately 7.16:1 to approximately 15:1 (i.e the RPM speed of secondary gear 41 is 7.16 - 15 times that of input primary sun gear 26), depending on the speed of primary gear 26 and, thus, of wind-powered rotor 6. Taken together with the fixed transmission ratio provided by the primary planetary stage, as described above, the second planetary stage provides a variable total transmission-ratio, which varies continuously from approximately thirty to one to approximately sixty to one.

In a preferred embodiment of the present invention, all of the above mentioned transmission elements are formed of SAE 9310 carburized steel, in accordance with American Gear Manufacturers Association (AGMA) standard AGMA-11. However, primary and secondary gears 20 and 38 are preferably formed of nitrated steel, in accordance with AGMA standard AGMA-10. However, it should be appreciated that any other suitable materials may be used.

It is appreciated that changes in wind velocity result in corresponding changes in the optimal RPM rate of rotor 6. The RPM rate of generator 46, however, is maintained at a constant rate "U". In a preferred embodiment of the invention, transmission apparatus 8 is constructed to have a preselected reference transmission- ratio, defined as the transmission ratio of the apparatus when secondary ring-gear 38 is at rest (which is rarely the case). It is appreciated that transmission apparatus 8 operates at the reference transmission ratio, wherein ring 38 is at rest, only when rotor 6 rotates at a predetermined RPM rate "R" corresponding to the preselected reference ratio.

When rotor 6 rotates at an RPM rate "R1" higher than R, gear ring 38 rotates in the same direction as that of secondary sun gear 41, such that the RPM rate of output shaft 44 remains equal to U. When rotor 6 rotates at an RPM rate "R2" lower than R, gear ring 38 rotates in a direction opposite that of secondary sun gear 41, such that the RPM rate of output shaft 44 remains, again, equal to U. Thus, since the RPM rate of rotor 6 varies while shaft 44 rotates at constant rate U, the transmission ratio provided by apparatus 8 varies in accordance with the rate of rotor 6.

When rotor 6 rotates at the higher rate "R1", ring 38 rotates servo-motor 42 which, thereby, acts as an electric generator and provides an AC output voltage, via servo wires 47, to converter 48. Converter 48 converts the output voltage into a corresponding AC voltage at the frequency of grid 50. Thus, the additional rotation of rotor 6, i.e. R1-R, is utilized to generate additional electric power to grid 50.

When rotor 6 rotates at the lower rate "R2", servo motor 42 rotates ring 38 and, therefore, draws an input voltage from converter 48. In order to provide this input voltage, converter 48 receives voltage from grid 50. Thus, electric power is drawn from grid 50 to compensate for the insufficient rotation of rotor 6. However, since the rotation output of motor 42 is fed back into transmission apparatus 8, via ring 38, most of the electric power (typically over 90%) consumed by motor 42 is eventually reproduced by generator 46 and, thereby, returned to grid 50.

It has been clearly determined by the present inventors that, despite some inevitable energy loss in servo-motor 42 (whose typical efficiency is well over 90%), the over-all efficiency obtained by the present transmission apparatus is at least 92% and, possibly, over 95%. It should be appreciated that there are no theoretical limitations to the efficiency of the present apparatus and, therefore, the above mentioned efficiencies may be improved by appropriate engineering.

It is an important feature of preferred embodiments of the present invention that wind gusts are constructively absorbed by the transmission apparatus, thereby providing the wind-turbine with high fatigue-resistance. Since surplus rotational energy is absorbed by servo-motor 42, wind-powered rotor 6 can rotate at the abrupt high rates required by wind gusts. This provision reduces the input torques, thereby, improves the fatigue-resistance of the wind turbine. Furthermore, the rotational energy absorbed by servo motor 42 is translated, as described above, to usable electric energy and supplied to grid 50. In a preferred embodiment of the invention, servo motor 42 is programmed to respond to abrupt changes in the input torque gradients which result from abrupt changes in the speed of rotor 6, due to strong wind gusts.

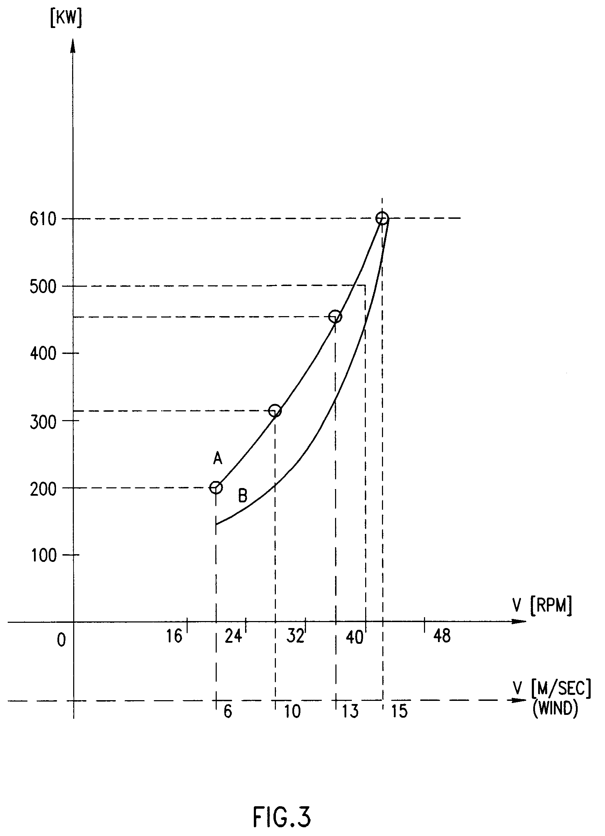

Reference is now made to Fig. 3, which graphically illustrates the performance of a wind turbine using the variable-ratio transmission apparatus of the present invention, as tested against wind turbines using conventional fixed-ratio transmission apparatus.

The graphs of Fig. 3 show the electric power output "P" (in KW) of both types of turbines as a function of wind velocity "V" (in meters per second). Wind velocities are also translated, for convenience, to the corresponding RPM rates of a wind-powered rotor. Graph "A" represents the improved apparatus of the present invention, whereas graph "B" represents a typical "state of the art" wind turbine using an optimally selected constant-ratio transmission.

It will be appreciated by persons skilled in the art that the present invention is not limited by the preferred embodiments particularly shown and described hereinabove. Rather, the scope of the present invention is defined only by the following claims:
Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Wind turbine transmission apparatus comprising at least one planetary transmission stage, operative for providing a continuously variable transmission ratio between a rotational input from a wind-rotor and a rotational output to an electric generator.

2. Transmission apparatus according to claim 1 wherein the variable transmission ratio varies substantially in accordance with the velocity of the wind powering the wind turbine.

3. Apparatus according to claim 1 or claim 2 and wherein the at least one planetary transmission stage comprises:
a primary planetary stage providing a fixed transmission ratio between the rotational input and a primary rotation; and
a secondary planetary stage providing a variable transmission ratio between the primary rotation and the rotational output.

4. Apparatus according to any of claims 1 - 3 and further comprising at least one servo motor operative to receive an electric power input and thereby to provide appropriate rotational power to the at least one planetary transmission stage, when the rotational input is below a preselected rate, and operative to receive appropriate rotational power from the at least one planetary transmission stage and to generate a corresponding electric power output, when the rotational input is above the preselected rate, such that the rotational output remains substantially at a preselected, constant, rate.

5. Apparatus according to claim 4 wherein the appropriate rotational power provided to and/or received from the at least one planetary transmission stage is provided to and/or received from the second planetary stage.

6. Apparatus according to either of claims 4 and 5 wherein the electric power is generated and received through a variable-ratio AC frequency converter.

7. Apparatus according to claim 3 wherein the primary planetary stage comprises:
an input shaft operative to receive the rotational input;
a substantially stationary primary ring gear;
a primary planetary arrangement, comprising a plurality of primary planet gears, associated with the input shaft and rotatable with respect to the primary ring gear; and
a primary sun gear for providing the primary rotation,
wherein the rotational input is received by the input shaft and transmitted by the primary planetary arrangement to the primary sun gear which, thereby, provides the primary rotation.

8. Apparatus according to claim 3 or claim 4 wherein the secondary planetary stage comprises:
a rotatable primary ring gear;
a secondary planetary arrangement, comprising a plurality of secondary planet gears, associated with the primary rotation and rotatable with respect to the circumferential ring gear; and
an secondary sun gear for providing the rotational output,
wherein the primary rotation is received by the secondary planetary arrangement and transmitted to the secondary sun gear which, thereby, provides the rotational output.

9. Apparatus according to claim 8 wherein the secondary ring gear rotates in the same direction as the secondary sun gear, whenever the rotational input is below a preselected rate, and rotates in a direction opposite that of the secondary sun gear, whenever the rotational input is above the preselected rate, such that the rotational output remains substantially at a preselected, constant, rate.

10. Apparatus according to claim 9 and further comprising at least one servo motor operative to receive an electric power input and thereby to appropriately rotate the secondary ring gear of the secondary planetary stage when the rotational input is above the preselected rate, and operative to receive appropriate rotational power from the secondary ring gear and to generate a corresponding electric power output when the rotational input is below the preselected rate, such that the rotational output remains substantially at the preselected, constant, rate.

11. Apparatus according to claim 10 wherein the electric power is generated and received through a variable-ratio AC frequency converter.

12. A wind turbine comprising:
a wind-powered rotor;
transmission apparatus according to any of claims 1 - 11 wherein the rotational input is a variable-rate rotation received from the wind-powered rotor; and
an AC voltage generator operative to receive the rotational output and to provide a corresponding output voltage.

13. A wind turbine according to claim 12 wherein the rotational output of the transmission apparatus is at a fixed rate.

14. A wind turbine according to claim 13 wherein the corresponding output voltage comprises an AC voltage at a fixed frequency.

15. A wind turbine according to claim 14 wherein the fixed frequency is 50 Hz.

16. A wind turbine according to claim 14 wherein the fixed frequency is 60 Hz.

17. A wind turbine comprising:
a wind-powered rotor;
transmission apparatus according to any of claims 4 - 6, 10 and 11, wherein the rotational input is a variable-rate rotation received from the wind-powered rotor; and
an AC voltage generator operative to receive the rotational output and to provide a corresponding output voltage to an electric grid,
wherein the electric power output of the servo motor is generated to the electric grid and the electric power input is supplied to the servo motor by the electric grid.
